# EUROPEAN PATENT SPECIFICATION

(11) **EP 2 178 644 B1**
(45) Date of publication and mention of the grant of the patent: **25.11.2020**
(21) Application number: 08767183.0
(22) Date of filing: 16.06.2008
(51) Int. Cl.: B02C 17/22, B65G 11/16

(54) **WEAR LINING ELEMENT AND AN ARRANGEMENT FOR THE ATTACHMENT OF SUCH**
VERSCHLEISSFUTTERELEMENT UND ANORDNUNG ZU DESSEN BEFESTIGUNG
ÉLÉMENT D'USURE FORMANT DOUBLURE, ET UN AGENCEMENT POUR SA FIXATION CELUI-CI

(30) Priority: 10.07.2007 SE 0701683
(43) Date of publication of application: 28.04.2010
(73) Proprietor: Metso Minerals (Wear Protection) AB, 934 81 Ersmark (SE)
(72) Inventor: ERIKSSON, Klas-Göran, S-934 32 Kåge (SE); MÖLLER, Tage, S-931 64 Skellefteå (SE)
(74) Representative: Hoffmann Eitle
(86) International application number: PCT/SE2008/050717
(87) International publication number: WO 2009/008810

(56) References cited:
- DE-A1- 3 135 256
- DE-A1- 3 907 816
- DE-A1- 4 314 512
- FR-A1- 2 440 819
- JP-U- H0 585 448
- US-A- 4 065 064
- US-A- 4 583 575
- US-A- 6 036 127
- US-A- 6 082 646

## Description

The present invention concerns an arrangement for the attachment of a wear lining element onto a surface that is exposed to wear in a supporting construction according to the introduction to claim 1.

Wall sections that are part of, for example, rotary grinding drums, chutes, channels and similar constructions are subject to wear, and are for this reason provided on their surface that is exposed to wear with a wear lining of wear-resistant material in order to increase the ability of the wall to withstand wear, abrasion, impacts and blows. This wear lining material is normally constituted by an elastomeric material, but it may also consist of other suitable materials with high resistance to wear, such as highly alloyed steel. A wear lining is normally divided into smaller units, known as segments, in the form of wear lining elements that in order to form a cladding are brought into contact next to each other on the side of the supporting construction that is exposed to wear. The wear lining elements are fastened to the support with the aid of fixing screws or bolts that are inserted into special attachment holes arranged in the supporting construction.

Since the wear lining elements are normally brought into contact with the side of the wall or the supporting construction that is exposed to wear while it is mounted using the said attachment holes from the opposite side of the supporting construction, known as the tensioning side, there are major problems associated with adapting each individual wear lining element such that the attachment means are located in the centre of each attachment hole before the wear lining element can be lowered into place.

Since the wear lining elements are relatively heavy, lifting aids, such as the arm of a crane or similar, are required. When installing lining into a rotary grinding drum for which the wear lining elements need to be replaced at relatively frequent intervals, the wear lining elements are lifted into the drum from one end and placed into position inside the drum, on its inner surface. Even if the crane operator is skilled, the actual adaptation of the wear lining elements to the inner surface of the drum is work that is both dangerous and time-consuming.

As has been mentioned above, one of the problems that are most difficult to solve when using wear lining elements as wear protection, is the technology for the rapid and efficient placement and fastening of the wear lining elements in question onto the supporting construction surface, i.e. onto the surface that is to be protected from wear. The known methods that have been suggested include providing the wear lining element with attachment holes such that a certain part of the mounting operation can take place from the side of the wear lining element that faces outwards, and making it possible to adapt the wear lining element such that the relevant attachment holes of the wear lining element and those of the supporting construction are located immediately above each other. In the said position, i.e. when the two holes are located immediately above each other, attachment means are introduced from the side of the wear lining element that is exposed to wear, i.e. from the wear side, in through the two holes such that it becomes possible to access the attachment means from the lower surface of the supporting construction, or more accurately, from the tensioning side of this surface. Such arrangements are known from, for example, US 6,036,127 and US 6,082,646. DE 3907816 shows an arrangement for attaching a wear lining element on an inside of a wall of a grinding drum wherein the bolt and an insert are inserted from the wear side of the wear lining element. The disadvantage of this prior art technology is that the wear of the wear lining elements increases due to the cavities that are formed. In particular, wear increases in those zones of the wear lining element that demonstrate holes. The lifetime of the wear lining elements can be increased by avoiding holes in the surface exposed to wear.

One of the problems that is difficult to master when using wear lining elements, in addition to that of the alignment during attachment, is that of achieving wear lining elements with as low an amount as possible of metallic material, without compromising on the requirement that it is to be possible to attach the elements in question rapidly and securely onto the supporting construction, i.e. the surface that is to be protected from wear.

One aim of the present invention, therefore, is to achieve an arrangement for the attachment of wear linings and wear lining elements onto the side of a supporting construction that is exposed to wear such as, for example, the wall or inner surface of a rotary grinding drum, which attachment arrangement leads to improved use and greater freedom during the construction and design of the rubber part, together with rapid and safe attachment of the wear lining elements onto the supporting construction. A further aim of the present invention is to achieve a wear lining element for a rotary grinding drum.

The aim of the invention is achieved with the aid of an arrangement that demonstrates the properties and characteristics that are specified in claim 1.

Further characteristics and advantages of the invention are made clear by the non-independent claims.

An embodiment of the invention will be described below with reference to the attached drawings, of which:
Figures 1-2 show a view in perspective of a wear lining element equipped with an attachment arrangement according to the present invention, which wear lining element is viewed obliquely from above and obliquely from below, respectively;
Figures 3-7 show cross-sections through the wear lining element shown in Figure 1 in the form of steps under the anchoring to a surface of a supporting construction exposed to wear, which supporting construction herewith is constituted by the drum wall of a grinding mill;
Figure 8 shows a view in perspective of a guide that is a component of the attachment arrangement;
Figure 9 shows a view in perspective of a mounting that is a component of the attachment arrangement.

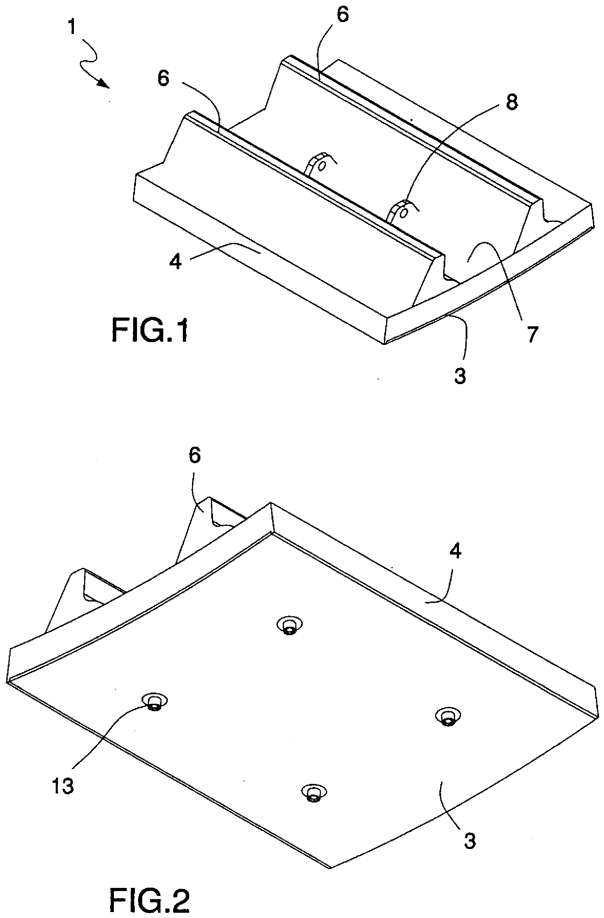

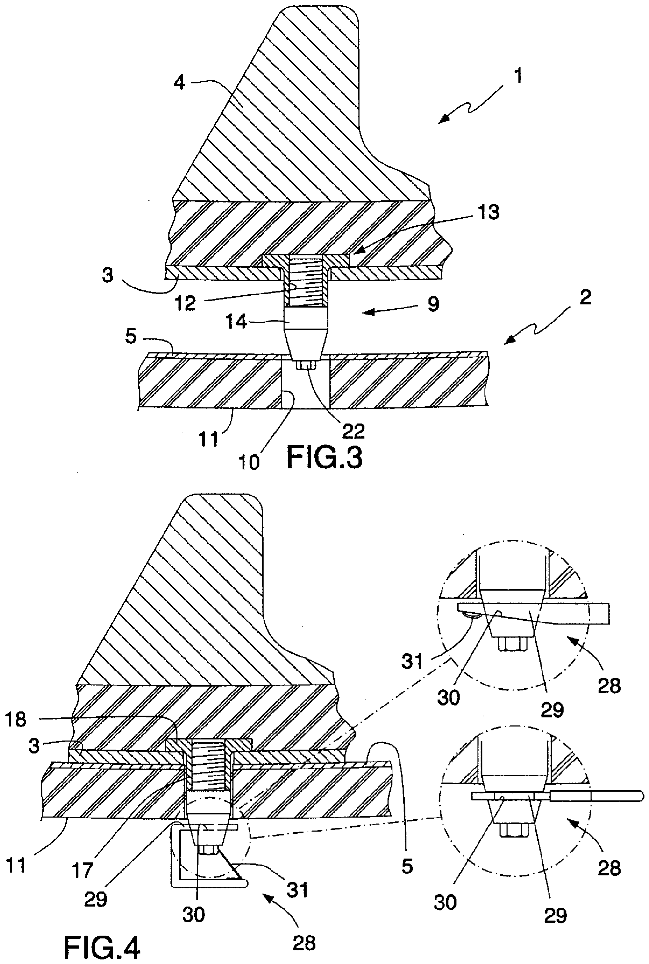

An extended wear lining element of the type that is intended to be placed in a row one after the other in order to form a cladding on the inside of a supporting construction generally denoted by 2 is shown in Figures 1 and 2, generally denoted by 1. The said supporting construction is shown in more detail in Figures 3-7 and it is constituted in this case by the wall of a rotary grinding drum that is exposed to wear. The wear lining element 1 has a bottom 3 that consists of a reinforcement of metal with wear protection in the form of an upper surface 4 of an elastic or rubber material such as, for example, natural rubber or synthetic rubber such as polyurethane. The wear protection is, naturally, not limited to elastomeric material: it can be constituted by any material that is suitable for the purpose. It may be constituted also by a durable metallic material.

As is made most clear by Figures 3-7, the wear lining element 1 is adapted in form to the supporting construction and it demonstrates a bottom 3 that is convex, with a curvature that corresponds to the concave supporting surface 5 of the supporting construction 2. The upper surface 4 of the wear lining element 1 has an irregular shape and is of rubber or an elastomeric material. It is joined to the bottom 3 through vulcanisation, although it would be possible also to attach it by another method, such as gluing.

In order to agitate the charge of ore in the rotary grinding drum the upper surface 4 forms ridges 6 that extend axially along the rotary grinding drum and that protrude in towards the centre of the drum. Lifting loops 8 are arranged on the said upper surface 4 in a valley part 7 that is located at a significantly lower height between two parallel ridges 6, which lifting loops are intended to interact with a hook or similar lifting means that is a component of a lifting accessory such as a crane, with the purpose of facilitating the handling of the wear lining element 1, principally due to the good balance that is obtained in this way. Attachment means 9 are arranged at the bottom of the wear lining element 1 intended for mounting of the wear lining element onto the supporting surface 5 of the supporting construction following introduction of the attachment means into attachment holes 10 arranged in the supporting construction 2. When the said attachment means 9 has been inserted into the attachment hole and extends out from the opposite side of the attachment hole 10, i.e. the side that faces away from the supporting surface 5 of the supporting construction 2 and forms a tensioning surface, the wear lining element 1 can be fastened onto the supporting surface 5 through the attachment means being brought into interaction with the tensioning surface through a fastening means that is a part of the attachment means. The said fastening means may be constituted by, for example, a nut and its associated washer.

Figures 3-7 show a series of cross-sections through the said wear lining element 1 and the supporting construction 2 during the insertion of the wear lining element and its mounting onto the supporting surface 5 of the supporting construction 2. The drawings make it clear that the concave supporting surface 5 of the supporting construction 2 is formed by sheet metal reinforcement and a ring-shaped cladding of elastomeric material laid onto this sheet metal. The said cladding is attached to the sheet metal by vulcanisation and forms the above-mentioned tensioning surface 11, which in this case is convex. The attachment means, generally denoted by 9, of the wear lining element protrudes from the convex bottom 3 of the wear lining element and it is, as has been described above, intended to be inserted into attachment holes 10 in the supporting construction 2.

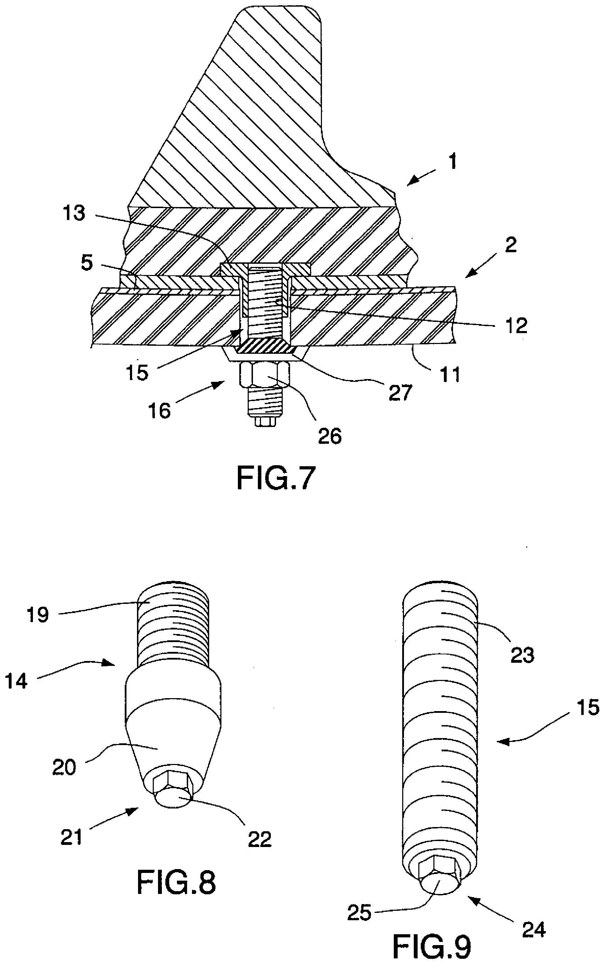

Each attachment means 9 comprises, according to the invention, a number of parts that can be united by interacting fixing and locking means 12, which parts are principally constituted by a holder 13 that is fixed attached to the wear lining element and that protrudes from the bottom 3 of the wear lining element, and two parts that can be united with the holder in a manner that allows them to be removed intended to be supported by the holder in a retentive manner. One of these two unitable parts forms a guide 14 for the insertion or direction of the wear lining element towards the supporting surface 5 of the supporting construction 2 through interaction with the attachment holes 10 of the supporting construction 2. The second of these unitable parts forms a mounting 15 in order to fix and hold in place by pressure the wear lining element 1 against the supporting surface 5 of the supporting construction 2 through interaction with the tensioning surface 11 of the supporting construction 2. The guide 14 and the mounting 15 are shown in more detail in Figures 8 and 9. In the embodiment described here, the mounting comprises a supplementary means 16 of fastening that can be adjusted for interaction with the tensioning surface 11 of the supporting construction 2.

Figures 3-5 make it clear that the holder 13 comprises an attachment sheath 17, the fixing and locking means 12 of which are constituted by an internal thread and a flange part 18 that has a relatively large diameter, to which flange the attachment sheath is attached by welding at the bottom 3 of the wear lining element 1 with the attachment sheath protruding from the bottom of the wear lining element.

Figure 8 makes it clear that the guide 14 comprises an element having the form of a peg, the fixing and locking means of which are constituted by a stud-shaped section 19 with circular cross-section, which stud-shaped section is provided with an external thread and can be united by screwing with the holder 13 and with a part 20 that is circularly cylindrical and has the form of a peg, which part 20 narrows towards its free end in a conical manner and whose cylindrical diameter exceeds the diameter of the stud-shaped part 19. Figure 3 makes it clear that the attachment sheath 17 of the holder 13 and the circularly cylindrical part of the guide 14 have been given corresponding outer diameters. The part 20 that has the form of a peg has been given the dimensions required to ensure that it acts as guidance towards the holed wall with the attachment holes 10 of the supporting construction 2 during adaptation of the wear lining element 1 to the supporting surface 5 of the supporting construction 2. The guide 14 is provided at its free end with a means 21 that has been designed for rotation and that can be accessed such that the guide can be placed into and removed from locking interaction with the holder 13. This turning means 21 comprises a grip 22 arranged at the free end of the part 20 that has the form of a peg, designed for interaction with a turning tool. Since the turning means 21 is arranged at the free end of the guide 14, it is possible, as Figure 4 makes most clear, to access the turning means also for the loosening and removal of the guide 14 from the holder 13 when the guide is located in the attachment hole 10.

With reference also to Figure 9, the mounting 15 comprises fixing and locking means 12 designed as a stud bolt 23 by which it is possible to screw the mounting into the holder 13. It is possible to access also the mounting 15 with the aid of a turning means 24 in order to place the guide into and remove the guide from locking interaction with the holder 13. The said turning means 24 comprises a grip 25 arranged at the free end of the mounting 15, intended for interaction with a turning tool and for attachment of the mounting 15 in the holder 13 and for removal of the same from the holder through the interacting threads of the two parts. The fastening means 16 that is associated with the mounting 15 is shown in more detail in Figure 7 and it comprises a nut 26 that interacts with the stud bolt 23 and a washer 27 that is intended to be placed between the said nut and the tensioning surface 11 of the supporting construction 2. Also a rubber washer is arranged between the washer 27 and the tensioning surface 11. It should be understood that the wear lining element 1 is pressed against the supporting surface 5 of the supporting construction 2 when the nut 26 is tightened against the tensioning surface 11 of the supporting construction 2.

Figure 4 and the enlarged details shown with dot-dashed lines make it clear that the present attachment arrangements comprise a locking means generally denoted by 28 that makes possible rapid and temporary attachment of the wear lining element 1 onto the supporting surface 5 of the supporting construction 2. The opportunity for rapid temporary attachment of the wear lining element is particularly interesting in certain applications since it contributes to shortening the assembly period. Not least for the exchange of drum linings in grinding mills is this important, since it reduces the requirement for dangerous operations inside the grinding drum itself while the final mounting operation can be carried out externally and from the tensioning side of the rotary grinding drum as a subsequent operation at a suitable later time. Such a suitable later time is immediately before the mill is to be taken into operation.

In a first alternative embodiment, the temporary locking means 28 can comprise a first lock member 29 in the form of a U-shaped element and a second lock member 30 in the form of a hole in the guide 14 that corresponds to one of the legs or shanks of the U-shaped element. Figure 4 makes it clear that the leg of the first lock member 29 is intended to be inserted into the said hole for temporary locking of the wear lining element 1 onto the supporting surface 5 of the supporting construction 2 through interaction between the guide 14 and the temporary locking means against the tensioning surface 11 of the supporting construction. The locking member 29 enters into locked, or self-limiting, interaction with the second lock member 30 through the influence of a snap fastener 31 in the form of a spring metal plate that is a component of the lock member 28.

As is shown in the enlargement of details in Figure 4, the first lock member 29 can in a second alternative embodiment comprise a wedge designed to interact with a second lock member 30 in the form of a hole arranged in the guide peg with a form that corresponds to that of the wedge.

The first lock member 29 can in a third alternative embodiment comprise a key that has been given U-shaped forked shanks at one of its ends, which shanks are to engage with the guide 14 in a manner that provides locking through surrounding at an angle greater than 180° a sector of a circle of a circumferential track arranged in the guide. This means that the forked shanks are sprung shanks, and have such a length that they snap onto the said circumferential track.

Figures 3 and 4 make it clear that the present lock arrangement acts in the following manner: After engagement of the guide 14 into the holder 13 with the aid of a suitable turning tool in interaction with the grip 22, the wear lining element 1 is introduced and guided down in towards the concave supporting surface 5 of the supporting construction 2 through interaction between the guide 14 and the holed wall of the attachment holes 10 of the supporting construction. With the wear lining element 1 in place, the wear lining element 1 can be temporarily fixed onto the concave supporting surface 5 of the supporting construction 2 by means of the locking means 28 and in that the locking members 29, 30 are brought into positions at which they interact.

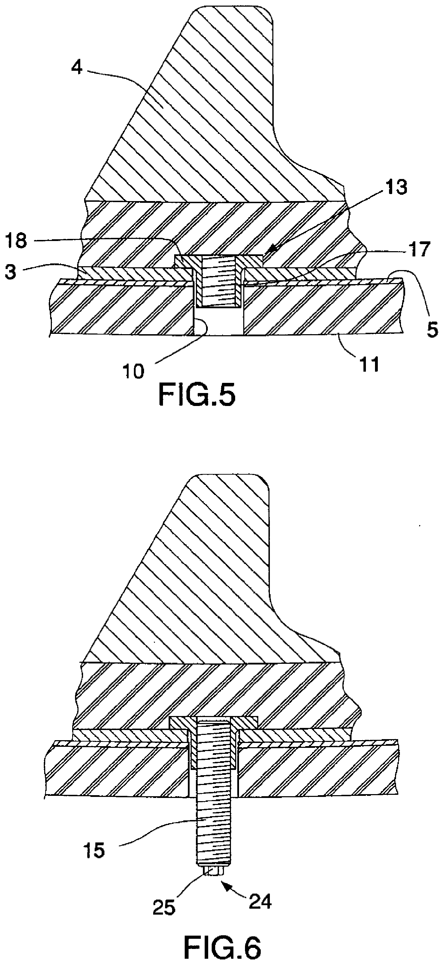

Figures 5-7 make it clear that following loosening and removal of the guide 14 that has been inserted into the attachment hole 10 from the holder 13 of the wear lining element 1 by means of a suitable tool in interaction with the grip 22, the mounting 15 is attached in the holder 13, an operation that is carried out by means of a turning tool in interaction with the grip 25 of the mounting, and screwing the mounting into the holder. Finally, the wear lining element 1 is fastened against the concave supporting surface 5 of the supporting construction 2 through the fastening means 16, in the form of nut 26 and washer 27 and sealing washer, that is associated with the mounting 15 being tightened by means of a suitable turning tool onto the tensioning surface 11 of the supporting construction 2.

The present arrangement is not limited to that which has been described above and shown in the drawings: it can be changed and modified in a number of different ways within the framework of the innovative concept specified by the attached patent claims. It should be understood, for example, that it would be possible to replace the mounting 15 and its associated fastening means 16 by a suitable screw or bolt provided with a casing.

## Claims

1. An arrangement for the attachment of a wear lining element onto a surface that is exposed to wear, a supporting surface (5) of a supporting construction (2),
comprising
a wear lining element (1),
attachment means (9) that when anchored in the wear lining element are each one intended to be inserted into attachment holes (10) arranged in the supporting construction whereby the wear lining element is fastened against the supporting surface by means of supplementary fastening means (16) that are associated with the attachment means and positioned to interact with a tensioning surface (11) located on the an opposite side of the supporting surface,
**characterised in that** the attachment means (9) comprises a holder (13) fixedly attached to the wear lining element (1),
a guide (14) designed to guide the wear lining element into place against the supporting surface through interaction with a hole wall in the attachment holes (10) of the supporting construction,
a mounting (15) designed to hold the wear lining element fastened against the supporting surface (5) through interaction with the tensioning surface (11) of the supporting construction,
and fixing and locking means (12) that allow the guide and the mounting, respectively, to be held in place in a manner that allows exchange, supported by the holder.

2. The arrangement according to claim 1, comprising temporary locking means (28) that make it possible to temporarily lock the wear lining element (1) against the supporting surface (5) of the supporting construction (2) through interaction between the guide (14) and the tensioning surface (11) of the supporting construction, whereby the temporary locking means (28) comprises a first locking member (29) and a second locking member (30) that act together, the said second locking member of which being arranged at the guide (14).

3. The arrangement according to claim 2 whereby the first locking member (29) can be introduced into the second locking member (30) and the locking members are held fixed in the united condition through the influence of a snap device (31) that acts between the members.

4. The arrangement according to claim 1, whereby the fixing and locking means (12) allows both the guide (14) and the mounting (15) to be united with the holder (13) in a manner that allows them to be removed.

5. The arrangement according to claim 1, comprising means (21) that can be accessed from the tensioning surface (11) after they have been united with the attachment holes (10) and that allow the guide (14) to be released and removed from the holder (13).

6. The arrangement according to claim 1, whereby the fixing and locking means (12) with which the guide (14) and the mounting (15) are united with the holder (13) in a manner that allows them to be freed comprise a threaded joint that acts between the respective parts.

7. The arrangement according to claim 5, whereby the means (21) for the release and removal of the guide (14) from the holder (13) comprises a turning means arranged at the guide designed for interaction with a turning tool.

8. The arrangement according to claim 7, whereby the turning means (21) comprises grips (22) arranged at the free end of the guide (14) and of the mounting (15) designed for interaction with a wrench key.

9. The arrangement according to claim 1, whereby the mounting (15) comprises a fixing sheath (17) provided with an internal thread that protrudes from the wear lining element (1).

10. The arrangement according to claim 1, whereby the guide (14) is extended and comprises an element having the form of a peg that demonstrates a part (19) that has the form of a stud that is circular and is provided with an external thread that can be united with the holder (13) by screwing and a circularly cylindrical part (20) that has the form of a peg that narrows in a conical manner towards its free end.

11. The arrangement according to claim 8 whereby the turning means (21) of the guide (14) is arranged at the free end of the part (20) that has the form of a peg.

12. The arrangement according to claim 1, whereby the mounting (15) comprises a screw means (23) with the form of a stud that can be screwed into the holder (13).

13. The arrangement according to claim 1, whereby the mounting (15) comprises a turning means (24) that allows the mounting to be released from the holder (13).

14. The arrangement according to claim 13 whereby the turning means (24) of the mounting (15) is arranged at the free end of the mounting.

15. The arrangement according to any of claims 1-14 wherein the wear lining element comprises a bottom (3) of sheet metal with a convex form with a curvature that corresponds to the concave inner surface of the rotary grinding drum, and an upper surface (4) of a wear-resistant material with an irregular form.

16. The arrangement according to claim 15, whereby the wear-resistant material comprises rubber or an elastomeric material and is united with the bottom (3) through vulcanisation.

17. The arrangement according to claim 16, whereby the upper surface (4) has the form of two ridges (6) that are separated by a distance and run parallel to each other and that protrude in towards the centre of the drum, and a part (7) that has the form of a valley and lies at a significantly lower height situated between the two ridges, and in which part having the form of a valley lifting hooks (8) are arranged intended for interaction with a hook or similar lifting means that is a component of a lifting accessory.

## Patentansprüche

1. Anordnung für die Befestigung eines Verschleißauskleidungselements an einer Oberfläche, die Verschleiß ausgesetzt ist, an einer Tragfläche (5) einer tragenden Konstruktion (2),
umfassend
ein Verschleißauskleidungselement (1),
Anbringungsmittel (9), die, wenn in dem Verschleißauskleidungselement verankert, jeweils in Anbringungslöcher (10) eingesetzt werden sollen, die in der tragenden Konstruktion ausgebildet sind, wobei das Verschleißauskleidungselement mit zusätzlichen Befestigungsmitteln (16), die mit den Anbringungsmitteln verbunden sind und positioniert sind, mit einer Spannfläche (11) zusammenzuwirken, die an einer gegenüberliegenden Seite der Tragfläche liegen, an der Tragfläche befestigt sind,
**dadurch gekennzeichnet, dass** die Anbringungsmittel (9) eine Halterung (13) umfassen, die fest an dem Verschleißauskleidungselement (1) angebracht ist,
eine Führung (14), die gestaltet ist, das Verschleißauskleidungselement gegen die Tragfläche durch Interaktion mit einer Lochwand in Position in den Anbringungslöchern (10) der tragenden Konstruktion zu führen,
eine Aufnahme (15), die gestaltet ist, das Verschleißauskleidungselement gegen die Tragfläche (5) durch Interaktion mit der Spannfläche (11) der tragenden Konstruktion befestigt zu halten,
und Fixierungs- und Verriegelungsmittel (12), die der Führung und der Aufnahme erlauben, jeweils in einer Weise in Position gehalten zu werden, die Austausch, gestützt durch die Halterung, erlaubt.

2. Anordnung nach Anspruch 1, umfassend vorübergehende Verriegelungsmittel (28), die eine vorübergehende Verriegelung des Verschleißauskleidungselements (1) gegen die Tragfläche (5) der tragenden Konstruktion (2) durch Interaktion zwischen der Führung (14) und der Spannfläche (11) der tragenden Konstruktion ermöglichen, wobei das vorübergehende Verriegelungsmittel (28) ein erstes Verriegelungselement (29) und ein zweites Verriegelungselement (30) umfasst, die zusammenwirken, wobei das zweite Verriegelungselement an der Führung (14) angeordnet ist.

3. Anordnung nach Anspruch 2, wobei das erste Verriegelungselement (29) in das zweite Verriegelungselement (30) eingeführt werden kann und die Verriegelungselemente durch den Einfluss einer Schnappvorrichtung (31), die zwischen den Elementen wirkt, in dem vereinten Zustand fixiert gehalten werden.

4. Anordnung nach Anspruch 1, wobei das Fixierungs- und Verriegelungsmittel (12) sowohl der Führung (14) als auch der Aufnahme (15) erlaubt, mit der Halterung (13) in einer Weise vereint zu sein, die deren Entfernung erlaubt.

5. Anordnung nach Anspruch 1, umfassend Mittel (21), auf die von der Spannfläche (11) zugegriffen werden kann, nachdem sie mit den Anbringungslöchern (10) vereint wurden, und die ein Lösen und Entfernen der Führung (14) aus der Halterung (13) erlauben.

6. Anordnung nach Anspruch 1, wobei die Fixierungs- und Verriegelungsmittel (12), mit welchen die Führung (14) und die Aufnahme (15) mit der Halterung (13) in einer Weise vereint sind, die deren Freigabe erlaubt, eine Gewindeverbindung umfassen, die zwischen den jeweiligen Teilen wirkt.

7. Anordnung nach Anspruch 5,wobei das Mittel (21) für das Lösen und Entfernen der Führung (14) aus der Halterung (13) ein Drehmittel umfasst, das an der Führung zur Interaktion mit einem Drehwerkzeug angeordnet ist.

8. Anordnung nach Anspruch 7, wobei das Drehmittel (21) Griffe (22) umfasst, die an dem freien Ende der Führung (14) und der Halterung (15) angeordnet sind, die zur Interaktion mit einem Schraubenschlüssel gestaltet sind.

9. Anordnung nach Anspruch 1, wobei die Aufnahme (15) eine Fixierungshülse (17) umfasst, die mit einem Innengewinde bereitgestellt ist, die aus dem Verschleißauskleidungselement (1) herausragt.

10. Anordnung nach Anspruch 1, wobei die Führung (14) verlängert ist und ein Element umfasst, das die Form eines Stifts aufweist, der ein Teil (19) aufweist, das die Form eines Zapfens aufweist, der kreisförmig ist und mit einem Außengewinde, das mit der Halterung (13) verschraubt werden kann, und einem kreisförmig zylindrischen Teil (20), das die Form eines Stifts aufweist, der sich konisch zu seinem freien Ende hin verjüngt, bereitgestellt ist.

11. Anordnung nach Anspruch 8, wobei das Drehmittel (21) der Führung (14) an dem freien Ende des Teils (20) angeordnet ist, das die Form eines Stifts aufweist.

12. Anordnung nach Anspruch 1, wobei die Aufnahme (15) ein Schraubenmittel (23) mit der Form eines Zapfens aufweist, das in die Halterung (13) geschraubt werden kann.

13. Anordnung nach Anspruch 1, wobei die Aufnahme (15) ein Drehmittel (24) umfasst, das eine Freigabe der Aufnahme aus der Halterung (13) erlaubt.

14. Anordnung nach Anspruch 13, wobei das Drehmittel (24) der Aufnahme (15) an dem freien Ende der Aufnahme angeordnet ist.

15. Anordnung nach einem der Ansprüche 1-14, wobei das Verschleißauskleidungselement einen Boden (3) aus Blech mit einer konvexen Form mit einer Krümmung, die der konkaven Innenfläche der drehenden Schleifwalze entspricht, und eine obere Oberfläche (4) aus einem verschleißbeständigen Material mit einer unregelmäßigen Form umfasst.

16. Anordnung nach Anspruch 15, wobei das verschleißbeständige Material Kautschuk oder ein elastomeres Material umfasst und mit dem Boden (3) durch Vulkanisieren vereint wird.

17. Anordnung nach Anspruch 16, wobei die obere Oberfläche (4) die Form von zwei Stegen (6), die durch einen Abstand getrennt sind und parallel zueinander verlaufen und die zum Mittelpunkt der Walze vorragen, und eines Teils (7), das die Form eines Tals aufweist und bei einer signifikant tieferen Höhe liegt, das zwischen den zwei Stegen gelegen ist, aufweist und wobei in dem Teil, das die Form eines Tals aufweist, Hebehaken (8) angeordnet sind, die zur Interaktion mit einem Haken oder einem ähnlichen Hebemittel bestimmt sind, das eine Komponente eines Hebezubehörs ist.

## Revendications

1. Agencement pour la fixation d'un élément de revêtement d'usure sur une surface qui est exposée à l'usure, une surface de support (5) d'une construction de support (2),
comprenant
un élément de revêtement d'usure (1),
des moyens de fixation (9) qui, lorsqu'ils sont ancrés dans l'élément de revêtement d'usure sont chacun destinés à être insérés à l'intérieur de trous de fixation (10) agencés dans la construction de support, selon lequel l'élément de revêtement d'usure est fixé contre la surface de support par l'intermédiaire de moyens de fixation (16) supplémentaires qui sont associés aux moyens de fixation et positionnés pour interagir avec une surface de tension (11) située sur le côté opposé de la surface de support,
**caractérisé en ce que** le moyen de fixation (9) comprend un élément de maintien (13) fixé de manière fixe à l'élément de revêtement d'usure (1),
un guide (14) conçu pour guider l'élément de revêtement d'usure en place contre la surface de support par interaction avec une paroi de trou dans les trous de fixation (10) de la construction de support,
une monture (15) conçue pour maintenir l'élément de revêtement d'usure fixé contre la surface de support (5) par interaction avec la surface de tension (11) de la construction de support,
et des moyens de fixation et de verrouillage (12) qui permettent respectivement au guide et à la monture d'être maintenus en place de manière à permettre l'échange, soutenus par l'élément de maintien.

2. Agencement selon la revendication 1, comprenant des moyens de verrouillage temporaire (28) qui permettent de verrouiller temporairement l'élément de revêtement d'usure (1) contre la surface de support (5) de la construction de support (2) par interaction entre le guide (14) et la surface de tension (11) de la construction de support, selon lequel le moyen de verrouillage temporaire (28) comprend un premier élément de verrouillage (29) et un second élément de verrouillage (30) qui agissent ensemble, ledit second élément de verrouillage étant agencé au niveau du guide (14).

3. Agencement selon la revendication 2, selon lequel le premier élément de verrouillage (29) peut être introduit dans le second élément de verrouillage (30) et les éléments de verrouillage sont maintenus fixes à l'état uni par l'influence d'un dispositif d'encliquetage (31) qui agit entre les éléments.

4. Agencement selon la revendication 1, selon lequel le moyen de fixation et de verrouillage (12) permet à la fois au guide (14) et à la monture (15) d'être unis à l'élément de maintien (13) d'une manière qui leur permet d'être retirés.

5. Agencement selon la revendication 1, comprenant des moyens (21) auxquels on peut accéder depuis la surface de tension (11) une fois qu'ils ont été unis aux trous de fixation (10) et qui permettent au guide (14) d'être libéré et retiré de l'élément de maintien (13).

6. Agencement selon la revendication 1, selon lequel les moyens de fixation et de verrouillage (12) avec lequel le guide (14) et la monture (15) sont unis à l'élément de maintien (13) d'une manière qui leur permet d'être libérés comprennent un joint fileté qui agit entre les parties respectives.

7. Agencement selon la revendication 5, selon lequel le moyen (21) pour la libération et le retrait du guide (14) de l'élément de maintien (13) comprend un moyen de rotation agencé au niveau du guide conçu pour interagir avec un outil de rotation.

8. Agencement selon la revendication 7, selon lequel le moyen de rotation (21) comprend des poignées (22) agencées au niveau de l'extrémité libre du guide (14) et de la monture (15) conçues pour interagir avec une clé.

9. Agencement selon la revendication 1, selon lequel la monture (15) comprend une gaine de fixation (17) dotée d'un filetage interne qui fait saillie depuis l'élément de revêtement d'usure (1).

10. Agencement selon la revendication 1, selon lequel le guide (14) est prolongé et comprend un élément présentant la forme d'une cheville qui démontre une partie (19) qui présente la forme d'un goujon qui est circulaire et est pourvue d'un filetage externe qui peut être uni à l'élément de maintien (13) par vissage et une partie cylindrique circulaire (20) qui présente la forme d'une cheville qui se rétrécit de manière conique vers son extrémité libre.

11. Agencement selon la revendication 8, selon lequel le moyen de rotation (21) du guide (14) est agencé au niveau de l'extrémité libre de la partie (20) qui présente la forme d'une cheville.

12. Agencement selon la revendication 1, selon lequel la monture (15) comprend un moyen de vissage (23) de la forme d'un goujon qui peut être vissé dans l'élément de maintien (13).

13. Agencement selon la revendication 1, selon lequel la monture (15) comprend un moyen de rotation (24) qui permet la libération de la monture de l'élément de maintien (13).

14. Agencement selon la revendication 13, selon lequel le moyen de rotation (24) de la monture (15) est agencé au niveau de l'extrémité libre de la monture.

15. Agencement selon l'une quelconque des revendications 1 à 14, selon lequel l'élément de revêtement d'usure comprend un fond (3) de tôle présentant une forme convexe présentant une courbure qui correspond à la surface interne concave du tambour de broyage rotatif, et une surface supérieure (4) d'un matériau résistant à l'usure présentant une forme irrégulière.

16. Agencement selon la revendication 15, selon lequel le matériau résistant à l'usure comprend un caoutchouc ou un matériau élastomère et est uni au fond (3) par vulcanisation.

17. Agencement selon la revendication 16, selon lequel la surface supérieure (4) présente la forme de deux arêtes (6) qui sont séparées par une distance et s'étendent parallèlement l'une par rapport à l'autre et qui font saillie vers le centre du tambour, et une partie (7) qui présente la forme d'une vallée et se trouve à une hauteur nettement inférieure située entre les deux arêtes, et dans laquelle partie présentant la forme d'une vallée, des crochets de levage (8) sont agencés pour l'interaction avec un crochet ou un moyen de levage similaire, qui est un composant d'un accessoire de levage.
